# EUROPÄISCHE PATENTSCHRIFT

(11) **EP 1 344 220 B1**
(45) Veröffentlichungstag und Bekanntmachung des Hinweises auf die Patenterteilung: **09.06.2004**
(21) Anmeldenummer: 01989616.6
(22) Anmeldetag: 21.12.2001
(51) Int. Cl.: G11B 33/04, B31B 43/00, B31F 1/00, B31B 41/00

(54) **VERFAHREN UND GERÄT ZUM HERSTELLEN EINER VERPACKUNG FÜR EIN SPEICHERMEDIUM, INSBESONDERE FÜR EINE CD**
METHOD AND APPARATUS FOR PRODUCING A PACKAGING FOR A STORAGE MEDIUM IN PARTICULAR FOR A CD
METHODE ET APPAREIL POUR PRODUIRE UN EMBALLAGE POUR SUPPORT D'ENREGISTREMENT, NOTAMMENT POUR CD

(30) Priorität: 21.12.2000 DE 20021924 U
(43) Veröffentlichungstag der Anmeldung: 17.09.2003
(73) Patentinhaber: Reinecke, Frank, 10405 Berlin (DE); Irgang, Thorsten, 14089 Berlin (DE)
(72) Erfinder: Reinecke, Frank, 10405 Berlin (DE); Irgang, Thorsten, 14089 Berlin (DE)
(74) Vertreter: Weitzel, Wolfgang, Dr.-Ing.
(86) Internationale Anmeldenummer: PCT/EP2001/015272
(87) Internationale Veröffentlichungsnummer: WO 2002/050836

(56) Entgegenhaltungen:
- DE-A- 19 909 475
- DE-U- 29 614 442
- FR-A- 1 224 080
- FR-A- 2 762 423
- GB-A- 2 331 981
- GB-A- 2 349 359
- US-A- 3 799 040

## Beschreibung

Die Erfindung betrifft eine Verpackung für ein multimediales Speichermedium wie eine Mini-CD, CD, SupremeCARD, beschnittene CD, DVD, Speicherchips und andere Massenspeichermedien (im weiteren Speichermedium genannt).

Solche Verpackungen sind bekannt. Dabei wird als Basis eine Karte aus einem faserhaltigen Material verwendet, beispielsweise aus Papier oder Karton. Es ist bekannt, solche Karten mit einer Ausbeulung zu versehen, deren Gestalt dem aufzunehmenden Speichermedium entspricht. Auf die folgenden Druckschriften wird verwiesen:

### (1) GB 23 49 359 A

Diese Druckschrift zeigt eine Karte mit einer Einprägung zur Aufnahme eines Speichermediums. Die Fixierung des Datenspeichers (CD) findet mittels einer kreisförmigen Klebezone 8 statt. Statt der Klebefolie sind sektorförmige Klappen 13 vorgesehen.

### (2) WO 00 66 368 A1

Die hier beschriebene Verpackung weist nur andeutungsweise eine Einprägung von unbestimmter Tiefe auf. Auch fehlt es hierbei an einer Sicherung des Speichermediums gegen Herausfallen.

### (3) FR 27 72 350 A1

Diese Druckschrift zeigt eine Karte, die auf nicht näher definierte Weise ein Speichermedium trägt

### (4) WO 00 56 555 A1

Hier gilt dasselbe, wie bei Druckschrift (3).

### (5) DE 297 11 577 U1

Die hier dargestellte Verpackung dient zum Aufnehmen eines Speichermediums, ohne das etwas über die Fixierung des Speichermediums an der Karte ausgesagt ist.

### (6) DE 296 19 409 U1

Hier gilt dasselbe wie bezüglich Druckschrift (5).

### (7) DE 296 12 920 U1

Hier gilt dasselbe wie bezüglich der Verpackung gemäß Druckschrift (5).

### (8) DE 196 46 397 A1

Bezüglich dieser Verpackung gilt dasselbe wie bezüglich jener gemäß Druckschrift (5).

### (9) US 57 75 492 A1

Die Aussparung zur Aufnahme einer CD oder dergleichen ist nicht durch Prägung, sondem durch Ausstanzen aus einem Bogen hergesteltt ("inner sheet 8").

### (10) US-A-3 799 040

beschreibt ein Verfahren zum Prägen einer CD-Verpackung aus Papier oder Karton. Hierbei wird ein elastischer Körper eingesetzt, um eine bessere Prägung zu erzielen.

Die bekannten Verpackungen haben je nach Aufbau und Herstellungsart Nachteile. Diese bestehen beispielsweise in hohen Herstellungskosten, in einer mangelhaften Haltbarkeit, oder in ästhetischen Mängeln.

Der Erfindung liegt die Aufgabe zugrunde, ein Verfahren und eine Vorrichtung zum Herstellen einer solchen Karte anzugeben, die die Mängel nicht aufweist, und demgemäß auch eine solche Karte selbst.

Diese Aufgabe wird durch die Merkmale der unabhängigen Ansprüche gelöst.

Die erfindungsgemäße Karte weist die folgenden Vorteile auf: Sie läßt sich aus umweltfreundtichem Material herstellen, und zwar materialsparend und kostengünstig. Die erfindungsgemäße Verpackung ist umweltschonend, da sich die Materialien auf einfache Weise wiederverwerten lassen. Die Herstellung ist energiesparend. Das Speichermedium wird zuverlässig gegen Beschädigungen durch äußere Einflüsse geschützt. Die Verpackung ist kostengünstig, weil sie sich maschinell herstellen lässt. Sie kann ohne weiteres als Werbeträger verwendet werden.

Durch das neue Verfahren lassen sich verschiedene Kartonmaterialien, die zum Beispiel für gewöhnliche Postkarten verwendet werden, mehr als doppelt so tief wie bisher prägen, ohne ein Reißen oder Faltenbildung zu verursachen. Dadurch werden neue Anwendungen für den geprägten Karton möglich. Dazu gehört der Verpackungsbereich in dem nun flache Medien sehr materialsparend und dadurch umweltfreundlich verpackt werden können, wobei das Medium mit der Kartonoberseite abschließen kann und durch eine einfache, plane Befestigung an der Oberseiten/Öffnung verschlossen/fixiert werden kann.

Zu der Materialersparnis zugunsten der Umwelt kommt die Verringerung des Verpackungsgewichts, das speziell beim Versenden und Verteilen zu Kostensenkungen führt. Durch die Möglichkeit des planen Abschließen mit der Kartonoberseite lässt sich ein flaches Medium wie beispielsweise eine Mini-CD, mit der Kartonverpackung als von der Deutschen Post AG zugelassene Postkarte versenden und ist sogar geeignet für das automatische Anschriftenlesen und Sortieren der Sendung. Bei einer Fixierung mit einer Klarsichtfolie ist das Medium vollständig und direkt von der Oberseite aus sichtbar, dadurch hebt sich diese Verpackung zusätzlich von den derzeit am Markt verfügbaren Versende-Verpackungen für solche Medien, wie Mini-CDs, ab. Mit den bisher bekannten Verfahren war es nicht möglich, Prägungen größerer Tiefe auszuführen. Wurde ein bestimmtes Maß der Prägungstiefe überschritten, so kam es zu einer Bildung von konzentrischen Falten oder zu einem Reißen des Materials. Die Patrize zieht nämlich Material in die Aussparung, bevor das Material durch den Anpressdruck der Form hinreichend fixiert ist. Bei der Erfindung tritt dies nicht auf.

Die Länge des Arbeitsstempels der Patrize ist zweckmäßigerweise größer als die Tiefe der Prägeaussparung. Dieses zusätzliche Maß ergibt sich aus der Dicke des dämpfenden Körpers, beispielsweise eines Moosgummirings. Die Dicke dieses Moosgummirings hängt ihrerseits vom Kompressionsverhalten des Gummis ab. Die Dicke des Moosgummirings bei maximaler Kompression plus der Matrizentiefe ergibt die Länge des Arbeitsstempels der Patrize. Dabei sollte der Moosgummi ohne Druck etwa die Länge des Patrizenstempels haben. Bei einem Ausführungsbeispiel hatte die Moosgummischicht eine Dicke von 4 mm. Der Arbeitsstempel der Patrize hatte eine Länge von ebenfalls 4 mm. Dies führte zu sehr guten Ergebnissen. Diese Maße haben sich als vorteilhaft für die maschinelle Handhabung erwiesen. Hierdurch wird ein Hängenbleiben beim Einlegen vermieden.

Neben der Dicke des Moosgummis ist auch der Innen- und Außendurchmesser sowie die Anordnung des Gummiringes bedeutend.

Der Innendurchmesser muss soviel Abstand zur Patrize gewährleisten, dass die Durchmesserverengung des Gummis bei der Kompression nicht dazu führt, dass es zwischen Patrizenflanke und Matrizenvertiefung gerät In diesem Fall reißt das geprägte Objekt ein. Deshalb ist einerseits der Abstand zur Patrize nötig, andererseits sollte die Patrize nicht konisch (entsprechend dem Matrizenabbild) zulaufen, da sich sonst das verbreiternde Gummi daran hochschieben könnte. Der Außendurchmesser sollte so gewählt sein, dass der Ring eine konzentrische Breite von mind. ca. 9 mm beträgt. Bei geringerer Breite (zum Beispiel 5 mm) reicht die Anlagefläche nicht, um das Prägeobjekt hinreichend zu fixieren; es kommt zu Zugfalten.

Bei der Anordnung des Gummis sollte beachtet werden, dass eine ebene Auflagefläche im Kompressionsbereich der Patrize besteht und eine ebene Matrizenfläche im gesamten Auflagebereich des Gummis, zumindest aber im gesamten Nutzbereich der Auflagefläche des Gummis. Dazu sollte das Gummi möglichst nahe am Prägestempel angeordnet werden, damit keine Dehnung des Prägeobjektes zwischen Prägeposition und Mossgummibeginn auftreten kann. Solch eine Dehnung könnte insbesondere eine Welligkeit und ein Zurückverformen der Prägung verursachen.

Auch kommt ein Niederhalter mit dämpfender Beschichtung in Betracht. Hier ist die Dimensionierung der Dämpfungsbeschichtung nur insoweit zu beachten, dass keine Eindruck- oder andere Spuren auf dem Prägeobjekt im Bereich der Nutzfläche zurückbleiben. Die Anordnung kann analog zum Moosgummi gewählt werden. Die Länge des Prägestempels ist dabei unerheblich, da dieser hier nicht in einer Platte integriert sein darf, sondern unabhängig vom Niederhalter beweglich sein sollte. Bei diesem Verfahren bietet sich eine Umkehr der Patrizen-Matrizenposition. Das heisst, die Matrize liegt unten und der Stempel der Patrize wird von oben eingedrückt.

Die Erwärmung der Matrize und die Verlängerung der Standzeit zur Einwirkung der Kräfte und Wärme reduzieren maßgeblich die Rückverformung der Prägung.

Die Erfindung ist anhand der Zeichnung näher erläutert. Darin ist im einzelnen folgendes dargestellt
- Figur 1: zeigt eine erfindungsgemäße Karte mit Prägung als Bestandteil einer erfindungsgemäßen Verpackung.
- Figur 2: ist eine Schnittansicht durch den Gegenstand gemäß Figur 1.
- Figur 3: zeigt in einer Explosionsdarstellung die Karte, das aufzunehmende Speichermedium sowie eine Abdeckfolie, und zwar gemäß einer ersten Ausführungsform.
- Figur 4: zeigt in einer Darstellung analog zu jener gemäß Figur 3 eine zweite Ausführungsform.
- Figur 5: zeigt in einer Darstellung analog jener gemäß Figur 3 eine sechste Ausführungsform.
- Figur 6: zeigt ein Prägewerkzeug mit Matrize und Patrize in einem Querschnitt.
- Figur 7: zeigt die Patrize gemäß Figur 4 in Draufsicht.
- Figur 8: zeigt eine Matrize in Draufsicht
- Figur 9: zeigt die Matrize gemäß Figur 8 in einer Schnittansicht
- Figur 10: zeigt die zugehörende Patrize in Draufsicht
- Figur 11: zeigt die Patrize gemäß Figur 10 in einer Schnittansicht.

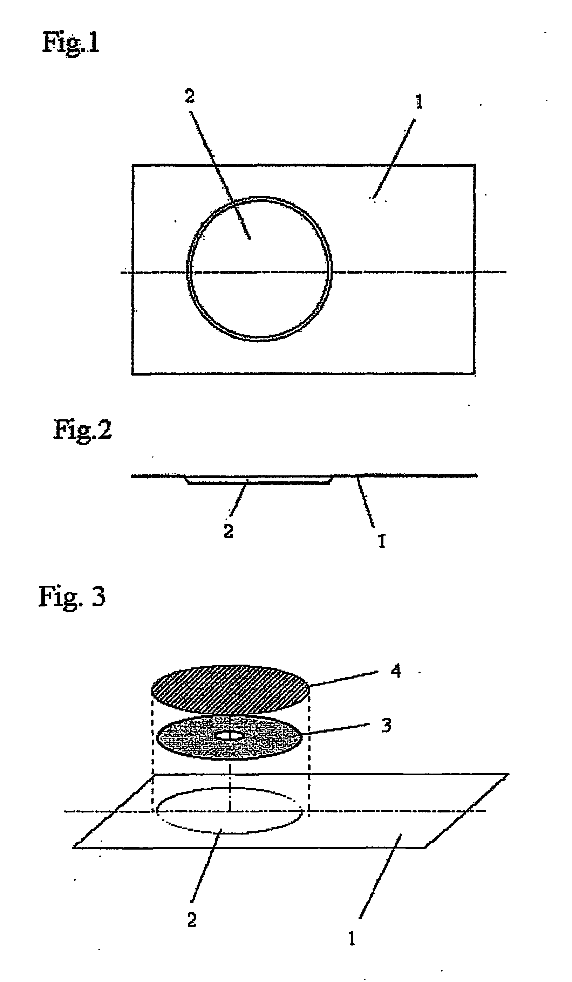

In den Figuren 1 bis 3 erkennt man eine Karte 1. Diese kann Postkartenformat haben oder größer oder kleiner sein. Die Karte besteht in vorliegendem Falle aus Karton. Dabei kann es sich um eine Kartonqualität mit einem Flächengewicht von 100 g/m² handeln. Auch Flächengewichte bis zu 500 g/m² sind möglich, beispielsweise 150, 200, 250 g/m². Auch andere Materialien sind denkbar, beispielsweise ein Faservlies aus Zellstoff oder aus synthetischen Materialien.

Die Karte 1 weist eine tiefgezogene Prägung 2 auf. Die Prägung ist in Draufsicht gesehen kreisrund und gleichmäßig tief. Sie dient der Aufnahme eines Speichermediums 3. Dieses ist in vorliegendem Falle eine CD.

Wie man aus Figur 2 erkennt, entsteht auf der Rückseite der Karte 1 eine Erhöhung -entsprechend der genannten Prägung 2. Die Motivseite der Karte 1 ist die in den Figuren 1 und 3 erkennbare Fläche. Diese Fläche kann Beschriftungen tragen.

Ist das Speichermedium 3 in die Prägung 2 eingelegt, so kann es mit der Folie 4 abgedeckt werden. Die Folie 4 ist eine Selbstklebefolie. Sie lässt sich leicht abziehen. Dabei braucht sie nur in ihrem Umfangsbereich eine Klebebeschichtung aufzuweisen, um eine klebende Haftung an der Karte zu bewirken. Der größte Teil der in Figur 3 untenliegenden Fläche der Folie 4 ist somit frei von Klebebeschichtung.

Die Prägung 2 muss nicht die Form des Speichermediums 3 haben, sondern kann beliebig als gestalterisches Mittel eingesetzt werden (zum Beispiel eine runde CD in einer sternförmigen Prägung). Die Karte 1 einschließlich des Speichermediums 3 kann mit beliebigen Motiven bedruckt werden.

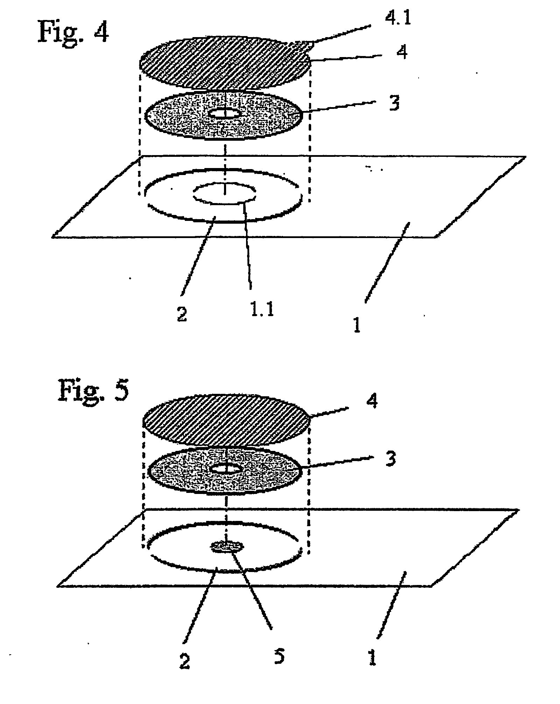

Die in Figur 4 gezeigte Ausführungsform unterscheidet sich gemäß jener von Figur 3 in zwei Punkten:
Die Folie 4 weist eine Lasche 4.1 zum leichteren Ablösen auf. Die Folie 4 kann vollflächig klebend sein. Dies gilt auch für die Folie gemäß Figur 3.
Ein weiteres Merkmal besteht in Folgendem:
Durch eine entsprechende Gestaltung des Arbeitsstempels der Patrize - siehe weiter unten - wird die Karte 1 ringförmig verdichtet - siehe Rille 1.1 -, ohne dass sich dies auf der Karte 1 abzeichnet. Die Rille hat eine Tiefe von 0,1 bis 0,2 mm. Ihr Durchmesser entspricht dem Durchmesser des Stapelringes, der üblicherweise an einer CD vorgesehen ist Die Abmessungen ändern sich von Fabrikat zu Fabrikat.

Die Ausführungsform gemäß Figur 5 ist nur bezüglich eines Merkmals verschieden von jener gemäß Figur 3. Hier ist nämlich auf den Boden der Prägung 2 ein Haftpolster 5 aufgeklebt Dieses ist im vorliegenden Falle kreisrund. Es könnte auch eine hiervon abweichende Gestalt haben. Es besteht beispielsweise aus Schaumstoff, zum Beispiel aus PP-Schaum. Es wird aufgeklebt nach Herstellen der Karte 1 mit ihrer Prägung 2. Die CD wird auf das Haftpolster 5 aufgesteckt und hieran durch Reibschluß gehalten, das heißt auf beiden Flächen eine Klebschicht aufweisen, so dass es einerseits am Boden der Prägung 2 und andererseits an der CD fixierbar ist, um diese in der Prägung 2 festzuhalten.

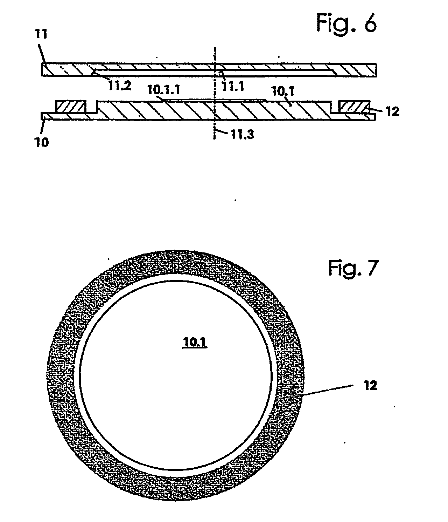

Die Figuren 6 und 7 lassen den Aufbau eines Prägewerkzeuges erkennen. In Figur 6 erkennt man eine Patrize 10 und eine Matrize 11. Die Patrize 10 weist einen Arbeitsstempel 10.1 auf. Die Matrize 11 weist eine Aussparung auf, die als Formnest dient Die Aussparung weist einen Boden 11.1 und eine ringförmige Begrenzungsfläche 11.2 auf. Die ringförmige Begrenzungsfläche ist gegen die Längsachse 11.3 des Werkzeuges geneigt Die Längsachse 11.3 ist zugleich die Achse, in welcher sich die beiden Werkzeugteile 10, 11 relativ zueinander bewegen, um die Prägearbeit auszuführen.
Der Arbeitsstempel 10.1 der Patrize 10 ist nicht geneigt. Wie man aus Figur 7 erkennt, ist er kreisrund. Sein Außendurchmesser entspricht dem Durchmesser der Bodenfläche 11.1 der Aussparung in der Matrize. Siehe die gestrichelten Linien 11.4.

Wie man ferner aus den Figuren 6 und 7 erkennt, beträgt die Patrize 10 einen Ring 12 aus Moosgummi. Zwischen dem Außendurchmesser des Arbeitsstempels 10.1 und dem Innendurchmesser des Moosgummiringes 12 besteht ein Zwischenraum. Der Moosgummiring 12 liegt somit an der äußeren, zylindrischen Umfangsfläche des Arbeitsstempels 10.1 nicht berührend an.

Die Dicke des Moosgummiringes 12 ist annähernd gleich der in Richtung der Achse 11.3 gemessenen Länge des Arbeitsstempels 10.1.

Der Arbeitsstempel 10.1 ist im vorliegenden Falle zylindrisch. Die Kante an seinem freien Ende kann leicht gerundet sein. Der Arbeitsstempe! 10.1 kann aber ebenfalls eine kegelstumpfförmige Gestalt haben, so dass er der Aussparung der Matrize 11 geometrisch ähnlich ist.

Die Karte 1 kann bereits vor der Prägung beidseitig bedruckt werden. Durch die Prägung nimmt das Motiv keinen Schaden. Dies ist ein Vorteil der Erfindung.

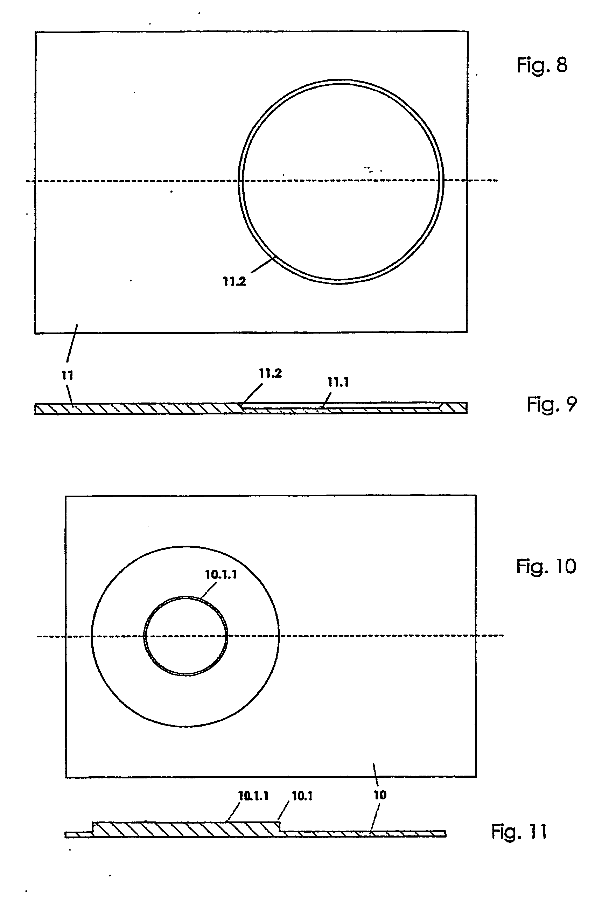

In den Figuren 8 bis 11 erkennt man wiederum ein Prägewerkzeug, umfassend Patrize 10 und Matrize 11. Dabei sind die in der Praxis vorkommenden Maße angegeben.
Von besonderem Interesse sind hierbei die Figuren 10 und 11. Dort erkennt man eine kreisringförmige Rippe 10.1.1. Diese ist der Stirnfläche des Arbeitsstempels 10.1 angeformt. Die Rippe könnte auch als separater Ring auf die Stirnfläche des Arbeitsstempels 10.1 aufgebracht und mit dieser fest verbunden sein.

## Patentansprüche

1. Verfahren zum Herstellen einer Verpackung für ein CD-artiges Speichermedium (3) mittels einer Matrize (11), die eine Aussparung aufweist, sowie mittels einer Patrize (10), die einen der Aussparung entsprechenden Arbeitsstempel (10.1) aufweist, mit den folgenden Verfahrensschritten:
1.1 es wird eine Karte (1) aus tiefziehfähigem Material zwischen Matrize und Patrize gelegt;
1.2 es wird ein elastischer Ringkörper (12) zwischen Karte und Matrize und/oder zwischen Karte und Patrize gelegt;
1.3 zwischen dem Außendurchmesser des Arbeitsstempels (10.1) und dem Innendurchmesser des Ringkörpers (12) besteht ein Zwischenraum.

2. Vorrichtung zum Herstellen einer Verpackung für ein CD-artiges Speichermedium;
2.1 mit einer Matrize, die eine Aussparung aufweist, sowie mit einer Patrize, die einen der Aussparung entsprechenden Arbeitsstempel aufweist;
2.2 zwischen Matrize und Patrize befindet sich ein elastischer Ringkörper;
2.3 zwischen dem Außendurchmesser des Arbeitsstempels und dem Innendurchmesser des Ringkörpers besteht ein Zwischenraum.

3. Vorrichtung nach Anspruch 2, **dadurch gekennzeichnet, dass** die Länge des Arbeitsstempels der Patrize größer ist, als die Tiefe der Aussparung.

4. Vorrichtung nach Anspruch 2 oder 3, **dadurch gekennzeichnet, dass** der Ringkörper aus Moosgummi besteht.

5. Vorrichtung nach einem der Ansprüche 2 bis 4, **dadurch gekennzeichnet, dass** die Aussparung der Matrize und/oder der Arbeitsstempel - in einem achssenkrechten Schnitt gesehen - kegeistumpfförmig sind.

6. Vorrichtung nach einem der Ansprüche 1 bis 5, **dadurch gekennzeichnet, dass** der Arbeitsstempel (10.1) auf seiner Stirnfläche eine zurn Arbeitsstempel konzentrische Rippe (10.1.1) aufweist, deren Durchmesser dem Durchmesser des Stapelringes des aufzunehmenden Speichermediums entspricht.

## Claims

1. A method for producing a packaging for a CD-like storage medium (3) by means of a matrix (11) having a recess as well as by means of a male mold (10) which comprises a working stamp (10.1) corresponding to the recess, with the following method steps:
1.1 a card (14) made of deep-drawing-capable material is placed between matrix and male mold;
1.2 an elastic annular body (12) is placed between card and matrix and/or between card and male mold;
1.3 there is an intermediate space between the outside diameter of the working stamp (10.1) and the inner diameter of the annular body (12).

2. An apparatus for producing a packaging for a CD-like storage medium;
2.1 with a matrix comprising a recess as well as with a male mold comprising a working stamp corresponding to said recess;
2.2 with an elastic annular body being situated between matrix and male mold;
2.3 with an intermediate space between the outside diameter of the working stamp and the inside diameter of the annular body.

3. An apparatus as claimed in claim 2, **characterized in that** the length of the working stamp of the male mold is larger than the depth of the recess.

4. An apparatus as claimed in claim 2 or 3, **characterized in that** the annular body consists of cellular rubber.

5. An apparatus as claimed in one of the claims 2 to 4, **characterized in that** the recess of the matrix and/or the working stamp have the shape of a truncated cone when seen in an axially perpendicular sectional view.

6. An apparatus as claimed in one of the claims 1 to 5, **characterized in that** the working stamp (10.1) comprises a rib (10.1.1) on its face side which is concentric to the working stamp and whose diameter corresponds to the diameter of the stacking ring of the storage medium to be received.

## Revendications

1. Procédé de réalisation d'un emballage pour un support d'enregistrement (3) du type CD utilisant une matrice (11) comportant un évidement ainsi qu'une contre-matrice (10) comportant un poinçon (10.1) complémentaire de l'évidement, ledit procédé consistant à suivre les étapes suivantes :
1.1 insérer entre matrice et contre-matrice une carte (1) réalisée en un matériau emboutissable ;
1.2 insérer entre la carte et la matrice et/ou entre la carte et la contre-matrice un tore élastique (12) ;
1.3 ménager un espace entre le diamètre extérieur du poinçon (10.1 ) et le diamètre intérieur du tore (12).

2. Dispositif destiné à la réalisation d'un emballage pour un support d'enregistrement du type CD ;
2.1 avec une matrice comportant un évidement ainsi qu'avec une contre-matrice comportant un poinçon complémentaire de l'évidement ;
2.2 un tore élastique étant situé entre la matrice et la contre-matrice ;
2.3 un espace étant ménagé entre le diamètre extérieur du poinçon et le diamètre intérieur du tore.

3. Dispositif selon la revendication 2, **caractérisé en ce que** la longueur du poinçon de la contre-matrice est supérieure à la profondeur de l'évidement.

4. Dispositif selon la revendication 2 ou 3, **caractérisé en ce que** le tore est réalisé en caoutchouc mousse.

5. Dispositif selon l'une quelconque des revendications 2 à 4, **caractérisé en ce que**, vus dans une section perpendiculaire à l'axe, l'évidement de la matrice et/ou le poinçon sont tronconiques.

6. Dispositif selon l'une quelconque des revendications 1 à 5, **caractérisé en ce que** le poinçon (10.1 ) comporte sur sa face d'extrémité une nervure (10.1.1) qui est disposée de manière concentrique autour du poinçon et dont le diamètre correspond au diamètre de l'anneau d'empilage du support d'enregistrement qu'il y a lieu de recevoir.
